# EUROPEAN PATENT APPLICATION

(11) **EP 1 482 163 A2**
(43) Date of publication of application: **01.12.2004**
(21) Application number: 04253094.9
(22) Date of filing: 26.05.2004
(51) Int. Cl.: F02K 9/97

(54) **Silicone-fiber-cork ablative insulation material**

(30) Priority: 27.05.2003 US 445674
(71) Applicant: UNITED TECHNOLOGIES CORPORATION, Hartford, CT 06101 (US)
(72) Inventor: Garrettson, Brook, San Jose CA 95125 (US)
(74) Representative: Leckey, David H.

(57) **Abstract**

An insulation material suitable for use on rocket motor cases and airframe surfaces is provided. The insulation material is formed from a mixture of cork particulate, a plurality of fibers, and a siloxane based binder. The cork particulate, the binder, and the fibers are present in a mass ratio of 10-100 parts binder to 0.1-50 parts fiber to 1-100 parts cork. The insulation material may have a homogeneous or non-homogeneous composition and may be composite in nature.

## Description

### BACKGROUND OF THE INVENTION

The present invention relates to an insulation material which has particular utility in connection with rocket motor cases and airframe surfaces exposed to high temperature environments and multiple Mach speed fluid shear.

In rocket and space vehicle applications, there is a design problem of having to keep the rocket motor case at or below 745°R in a greater than 2500°R environment of multiple Mach speed fluid shear. At roughly 1000°R, a typical siloxane base material will decompose from a polymer to a silica sand. At about 2200°R, the silica sand transforms into a durable silicon char layer.

In this environment, the outside heat intrudes into the surface of the insulation material such that one of the challenges is to prevent the shear forces experienced during high-speed flight from stripping the deeper-advancing layer of silica sand from the unaltered material surface below. If kept in place, the silica will transform into a durable char layer with the advancing temperature slope. Another challenge is to minimize the conduction of heat into the material beneath such that the least thickness and mass of insulation material will adequately protect the motor case or airframe surface from overheating for a given mission and for a given service life.

### SUMMARY OF THE INVENTION

Accordingly, it is an object of the present invention to provide an improved insulation material for use with rocket motors and airframe structures which require protection from extreme heat.

The foregoing object is attained by the insulation material of the present invention.

In accordance with the present invention, an insulation material broadly comprises a mixture of cork particulate, a plurality of fibers, and a siloxane based binder. Said insulation material may have a homogeneous or non-homogeneous composition and may be composite in nature. Other details of the silicone-fiber-cork ablative insulation material of the present invention, as well as other objects and advantages attendant thereto, are set forth in the following detailed description.

### DETAILED DESCRIPTION OF THE PREFERRED EMBODIMENT(S)

The insulation material of the present invention uses a random mixture of 40-80-120 mesh and/or finer cork particulate and/or cork wafer/shaving and fiber in a siloxane-based binder. All forms of cork ingredient pertaining to this invention will be referred to as "cork particulate." The binder may be selected from but is not limited to a group which includes the following commercially available binders: General Electric RTV 627, RTV 615, RTV 511, RTV 560, RTV 577, TSE 326, RTV 655, RTV 60, RTV 630, RTV 656, Dow Corning Silastic E, Silastic J, Silastic L, Sylgard 182, Sylgard 184, Sylgard 186, 3 -6891, 3-6077, 93-104, 96-083, 3-6077, 3-3516, 6-1104, 6-1125, RTV 3110, RTV 3104, RTV 3112, RTV 3120, RTV 736, RTV 752, RTV 832, RTV 736, Electro-Lite ELC-325, Isulcast RTVS 828, Techno TSE-3331 as well as many others including, but not limited to, any mixtures utilizing any mixture of curing agents and application primers. The binder viscosity would be 20,000 cps or less for convergent spray application, and unlimited for non-convergent spray application. Those binders having a greater viscosity than 20,000 cps may be thinned down for convergent spray application using a solvent such as methyl ethyl ketone. The cork particulate may be a commercially available particulate supplied by Amorim Industrial Solutions, Trevor, WI as well as Manton Industrial Cork Products, Hauppauge, NY. The fiber can be, but is not limited to, the following choices: Aramid (KEVLAR), PBO poly((p-phenylene-2,6-benzobisoxazole)), carbon, aluminum oxide, silicon nitride, and mixtures thereof. The fiber length may be variable from 0.5 mm to 15.0 mm. The cork fill may be maximized to still allow spray application of the final component mixture onto a surface.

The fibers are added to the insulation material to promote ablation char layer retention by providing a stabilization matrix for the siloxane/cork material which may be weakened during thermal transformation. The fiber is added in an amount that is less than that which would reduce the cold-temperature, bi-axial flexibility of the insulation material below that which is required for layered use on a rocket motor case or airframe surface. Airframe surfaces not requiring flexible coatings may utilize a higher fiber content insulation mixture yielding a stiffer final insulation material.

The mass ratio of cork to binder to fiber ranges from 10-100 parts binder to 0.1-50 parts fiber to 1-100 parts cork, not including any required mixture component primers.

The insulation material may be produced by spraying all three components in a controlled mixture according to a prescribed component recipe onto a surface to a given thickness. The insulation material is then cured over a specific amount of time through its subjection to below-room, room or elevated temperatures. The finished insulation material may be tailored to be composed of layers of specifically varied component ratios. The spray pressure and orifice size depends on the viscosity of the siloxane binder as well as the cork particle size, fiber length and component ratios. Overall insulation material thickness is determined by airframe life cycle requirements, usually not to exceed 1.0 inch (25.4 mm). Insulation segment area size is typically application design-specific. The cork and/or fiber may require the minimal prior application and cure of coupling agents or primers before mixing with a siloxane binder and spraying/applying onto the application surface. Various coupling agents that are applied sparingly to a bond surface and dried/cured before application of the insulation material to a protected surface include, but are not limited to, DuPont Tyzor, Dow Corning 3-6060, 92-023, Sylgard prime coat, P5200, DC1200, DC 1204, P5204, DC1205, General Electric SS4004, SS4044, SS4120, SS4155 and SS4179. If the insulation material is sprayed/applied directly onto a protected surface, any required coupling agents or primers are first applied to the application surface and cured before the cork and/or fiber are mixed and sprayed/applied with the silicone binder onto the surface to form a final product. The time and temperature required for final product cure depends on the exact siloxane binder/cure agent(s)/mixtures/fillers used. Cure temperatures can range from below-room temperature to 600 deg. F (316°C) requiring cure times ranging from 20 seconds to 100 hours with exact times and temperatures depending on the materials/binders/mixtures/fillers/cure agent(s) used, the cured section thicknesses, as well as the cure environments that are available and are utilized.

The finished insulation product is either directly sprayed/applied onto a final bond surface such as a protected airframe surface, rocket motor case or it is sprayed/applied onto a releasable contoured mold surface before it is cured and subsequently removed for installation onto a final bond surface, namely a protected airframe surface.

For a rocket, booster, or other airframe surface, the pre-cured, pre -fabricated, multi-layer insulation assembly may be applied to these surfaces using an adhesive with or without the use of coupling agent(s)/primer(s). It may then be over-wrapped to provide uniform compaction pressure between the insulation assembly and the airframe surface during adhesive cure. Curing is a process that allows a material to harden or crosslink and/or adhere to an adjoining surface and/or surfaces over a specific amount of time through its subjection to below-room, room or elevated temperatures. The goal of an over-wrap cure is for the insulation assembly to form a uniform high-quality bond with the protected airframe surface using a layer of cured adhesive. Alternatively, the insulation assembly may be sprayed/applied directly onto the airframe surface, primed or unprimed, with each layer successively applied and the assembly cured either in progressive partial/full cure layer stages and/or cured all at one time in-place. Non-insulation layers may be added during assembly layer build-up such that they are embedded within the final insulation assembly.

For convergent spray application a controlled amount of ingredients are mixed at the spray head during application onto a surface.

The primer/coupling agent may also be applied to pre-cured insulation assembly/layer/layers before bonding to said surface using adhesive.

The insulation material of the present invention protects a surface from aero-heating that occurs at Mach flight speed and provides a favorable performance-to-mass ratio and cost. The insulation material bi-axially expands and contracts with the protected surface without cracking or unbonding and performs its function at virtually all tactical operating temperatures. As part of a proprietary lightning mitigation assembly, it can sustain a lightning strike with acceptable levels of damage to itself while rendering the protected surface undamaged. As part of a proprietary lightning mitigation assembly, it insulates the protected surface from aero-heating while maintaining the protected surface temperature at or below a maximum allowable during a full severity Mach flight before and after several lightning strikes in different locations. It is a plug-in replacement for phenolic cork sheet material. It is a lower cost and/or better performing alternative to other insulating materials such as AST Sil-cork and Lockheed Martin MA-25. It is a material which does not pose unmitigatible environmental or safety concerns.

It is apparent that there has been provided in accordance with the present invention a silicone-fiber-cork ablative insulation material which fully satisfies the objects, means, and advantages set forth hereinbefore. While the present invention has been described in the context of specific embodiments thereof, other alternatives, modifications, and variations will become apparent to those skilled in the art having read the foregoing description. Accordingly, it is intended to embrace those alternatives, modifications, and variations as fall within the broad scope of the appended claims.

## Claims

1. An insulation material comprising a mixture of cork particulate, a plurality of fibers, and a siloxane based binder.

2. An insulation material according to claim 1, wherein said cork particulate comprises a mixture of 40 mesh and/or 80 mesh and/or 120 mesh and/or finer cork particulate and/or cork wafer/shaving.

3. An insulation material according to claim 1 or 2, wherein said fibers are selected from the group consisting of aramid fibers, PBO fibers, carbon fibers, aluminum oxide fibers, silicon nitride fibers, and mixtures thereof.

4. An insulation material according to any preceding claim, wherein said cork particulate, said binder, and said fibers are present in a mass ratio of 10 -100 parts binder to 0.1-50 parts fiber to 1-100 parts cork.

5. An insulation material according to any preceding claim, further comprising at least one of a primer and a coupling agent.

6. An insulation material according to any preceding claim, wherein said binder has a viscosity no greater than 20,000 cps for spray-head convergent spray application, unrestricted viscosity for non-convergent spray and/or non-spray application.

7. A method comprising the steps of:
preparing a mixture of cork particulate, fibers, and a siloxane based binder; and
spraying or otherwise applying said mixture onto a surface to be protected. and/or
preparing cork particulate, fibers, and a siloxane based binder; and
simultaneously mixing and spraying or otherwise mixing and applying said mixture onto a surface to be protected.

8. A method according to claim 7, wherein said mixture preparing step comprises preparing a mixture wherein said cork particulate, said binder, and said fibers are present in a mass ratio of 10-100 parts binder to 0.1-50 parts fiber to 1-100 parts cork.

9. A method according to claim 7 or 8, further comprising curing the sprayed or otherwise applied mixture to form an insulation layer or layers on said surface.

10. A method according to claim 7, 8 or 9, further comprising applying at least one of a primer and a coupling agent to said surface before said spraying/application step.

11. An airframe surface having an insulating material applied thereto, said insulating material being a material as claimed in any of claims 1 to 6.

12. A motor case having an insulating material applied thereto, said insulating material being a material as claimed in any of claims 1 to 6.
